# EUROPÄISCHE PATENTSCHRIFT

(11) **EP 2 524 585 B1**
(45) Veröffentlichungstag und Bekanntmachung des Hinweises auf die Patenterteilung: **24.02.2021**
(21) Anmeldenummer: 12164216.9
(22) Anmeldetag: 16.04.2012
(51) Int. Cl.: A01B 63/10, A01D 41/14

(54) **Hubwerk**
Lifting device
Dispositif de levage

(30) Priorität: 14.05.2011 DE 102011101553
(43) Veröffentlichungstag der Anmeldung: 21.11.2012
(73) Patentinhaber: Robert Bosch GmbH, 70442 Stuttgart (DE)
(72) Erfinder: Jessen, Soenke, 71732 Tamm (DE); Fauser, Dominik, 71546 Aspach (DE)

(56) Entgegenhaltungen:
- EP-A2- 1 897 847
- WO-A1-2005/005842
- DE-A1- 10 330 344
- DE-A1-102004 033 315
- US-A- 3 908 345
- US-A- 4 873 817
- US-A1- 2007 068 129

## Beschreibung

Die Erfindung betrifft ein Verfahren zur Steuerung eines hydraulisch betätigten Hubwerks für eine mobile Arbeitsmaschine.

Die Druckschrift US 4,873,817 zeigt ein Hubwerk für Anbaugeräte, die nicht auf dem Erdboden abgesetzt werden. Dabei ist ein Druckbegrenzungsventil des Hubwerks mit einer Arbeitsleitung verbindbar, die eine Pumpe mit einem in Heberichtung des Hubwerks wirksamen Druckraum eines Zylinders verbindet. An der tragenden Landmaschine ist ein Schlitten angebracht, der den Boden abtastet, womit ein Stellsignal für das Druckbegrenzungsventil erzeugt wird.

Aus dem Stand der Technik sind Hubwerke für mobile Arbeitsmaschinen bekannt, die im zum Boden abgesenkten Zustand eines daran gekoppelten Anbaugerätes eine Entlastungskraft zu Verfügung stellen. Damit wird ein Großteil der Gewichtskraft des Anbaugerätes kompensiert um den Widerstand des am Boden reibenden Anbaugerätes zu minimieren.

Dabei sind Anwendungen mit Entlastungsfedern bekannt, deren Entlastungskraft wegen der Federkennlinien nicht konstant ist. Weiterhin sind hydraulische Entlastungszylinder und hydraulische Speicher zur Entlastung bekannt.

Nachteilig an den vorbeschriebenen Hubwerken ist, dass eine zu hoher Entlastungskraft bzw. ein zu hoher Entlastungsdruck das Anbaugerät derart entlasten kann, dass es bei abfallendem Bodenprofil abhebt. Wenn es sich bei dem Hubwerk z.B. um ein Fronthubwerk und bei dem Anbaugerät z.B. um ein Mähwerk auf Gleitkufen handelt, entsteht beim Einfahren in eine Senke oder nach Überfahren einer Kuppe eine zu große Schnitthöhe.

In der Druckschrift DE 10 2007 040 877 A1 ist ein Hubwerk offenbart, dessen hydraulische Anordnung ein vom Fahrer der mobilen Arbeitsmaschine einstellbares Entlastungsdruckbegrenzungsventil aufweist. Damit kann der Fahrer einen Sollwert des Entlastungsdrucks wählen und so z.B. an das Gewicht des Anbaugerätes anpassen.

Auch ein so gewähltes Restgewicht des Anbaugerätes ist stets ein Kompromiss zwischen geringem Fahrwiderstand der mobilen Arbeitsmaschine und guter Nachführung des Anbaugerätes bei Unebenheiten des Bodens, da der Entlastungsdruck über länger Zeit (z.B. während des Mähens einer Wiese) eingestellt bleibt.

Dem gegenüber liegt der Erfindung die Aufgabe zu Grunde, ein Verfahren zur Steuerung eines hydraulisch betätigten Hubwerks zu schaffen, das trotz minimiertem Fahrwiderstand eines angekoppelten Anbaugerätes eine verbesserte Nachführung des Anbaugerätes bei Unebenheiten des Bodens ermöglicht. Dabei soll sicher gestellt werden, dass ein kurzes Absacken oder kurzwegiges Schwingen des Anbaugerätes nicht zur erfindungsgemäßen Regelung führt.

Diese Aufgabe wird gelöst durch ein Verfahren zur Ansteuerung eines Hubwerks mit einer Entlastungsdruckregelung mit den Merkmalen des Patentanspruchs 1.

Das erfindungsgemäß gesteuerte Hubwerk wird hydraulisch betrieben und ist zur Montage oder zur Verwendung an einer mobilen Arbeitsmaschine - insbesondere an einem Traktor - vorgesehen. Das Hubwerk stellt im zum Boden abgesenkten Zustand eines daran gekoppelten Anbaugerätes eine Entlastungskraft zu Verfügung. Das Hubwerk bzw. seine Hydraulik weist ein Entlastungsdruckbegrenzungsventil auf, das in Abhängigkeit von positiven oder negativen Steigungsraten im von der mobilen Arbeitsmaschine überfahrenen Bodenprofil regelbar ist. Diese Steigungsraten werden für den vorliegenden Text als Höhenunterschied bzw. Höhenänderung (Δh) des Bodens im Verhältnis zur Zeit (Δt) definiert und können im Extremfall einer abfallenden Stufe im Bodenprofil auch unendlich hoch sein. Die Zeit hängt dabei einerseits von der Geschwindigkeit ab, mit der die mobile Arbeitsmaschine den Höhenunterschied überfährt und andererseits von der Steigung bzw. dem Gefälle des Höhenunterschiedes. Zur Erfassung der Steigungsraten ist eine Sensoranordnung vorgesehen. Damit ist ein hydraulisch betätigtes Hubwerk geschaffen, bei dem trotz minimiertem Fahrwiderstand durch Reduzierung der Gewichtskraft eines angekoppelten Anbaugerätes - auf z.B. 20% - eine verbesserte schnell reagierende Nachführung des Anbaugerätes bei vergleichsweise abrupten (steil und/oder in kurzer Zeit) Unebenheiten des Bodens ermöglicht ist. Weiterhin kann das Anbaugerät mit der erfindungsgemäßen Entlastungsdruckregelung im Normalbetrieb mit höherer Entlastung (durch höheren Entlastungsdruck) geschoben oder gezogen werden, wodurch Kraftstoff eingespart wird.

Das Anbaugerät kann z.B. ein Mähwerk, ein Schneepflug, eine Packerwalze oder ein Mulcher sein.

Vorzugsweise ist das Entlastungsdruckbegrenzungsventil ein von einer Steuereinheit oder Electronic Control Unit (ECU) elektronisch ansteuerbares Proportional-Druckbegrenzungsventil.

Bei einer bevorzugten Weiterbildung mit vorrichtungstechnisch geringem Aufwand ist die Sensoranordnung von einem Winkelgeschwindigkeitsaufnehmer gebildet, über den eine Winkelgeschwindigkeit zwischen einem Lenker - insbesondere einem Unterlenker - und der mobilen Arbeitsmaschine messbar ist.

Der Winkelgeschwindigkeitsaufnehmer ist vorzugsweise von einem Winkelaufnehmer im Zusammenwirken mit der Steuereinheit gebildet. Von der Steuereinheit ist über den Winkelaufnehmer die Winkelgeschwindigkeit des Lenkers gegenüber der mobilen Arbeitsmaschine durch Differentiation des Winkels messbar.

Die Sensoranordnung kann auch einen in Fahrtrichtung der mobilen Arbeitsmaschine vor dieser oder vor dem Anbaugerät angeordneten Abstandssensor haben, der das Bodenprofi direkt - z.B. mit Laser oder Ultraschall - erfasst. Damit entsteht eine verlängerte Zeit, die für das Hubwerk oder für die Steuereinheit genutzt werden kann, um auf die Steigungsrate im Bodenprofil optimal zu reagieren.

Bei einer bevorzugten Weiterbildung wird bei einer von der Sensoranordnung ermittelten Verringerung der Höhe des Bodens ein erster Öffnungsdruck des Entlastungsdruckbegrenzungsventils eingestellt, und bei einer von der Sensoranordnung ermittelten Vergrößerung der Höhe des Bodens wird ein zweiter Öffnungsdruck des Entlastungsdruckbegrenzungsventils eingestellt. Der erste Öffnungsdruck ist dann geringer als der zweite Öffnungsdruck, z.B. um 25-50%.

Vorzugsweise ist das Entlastungsdruckbegrenzungsventil an einer Entlastungsdruckleitung angeordnet, über die ein Entlastungsdruckraum versorgbar ist.

Ergänzend kann eine Belastungsdruckleitung vorgesehen sein, über die ein Belastungsdruckraum versorgt wird, der dem Entlastungsdruckraum entgegenwirkt. Damit kann eine nach unten wirkende beschleunigende Kraft auf das Arbeitgerät wirken, um auch bei besonders abrupt abfallendem Bodenprofil oder bei einem besonders leichten Arbeitgerät eine optimal Nachführung zu gewährleisten, oder um langsam fallenden Entlastungsdruck zu kompensieren.

Dabei wird es besonders bevorzugt, wenn auch ein Belastungsdruck in der Belastungsdruckleitung von einem Belastungsdruckbegrenzungsventil über die Sensoranordnung in Abhängigkeit der Steigungsrate im Bodenprofil regelbar ist.

Das erfindungsgemäße Verfahren dient zur Regelung eines Entlastungsdrucks eines Hubwerks einer mobilen Arbeitsmaschine, das im zum Boden abgesenkten Zustand eines daran gekoppelten Anbaugerätes eine Entlastungskraft zu Verfügung stellt. Das Verfahren hat die Schritte:
- Erfassen einer positiven oder negativen Steigungsrate im Bodenprofil über einen Sensoranordnung; und
- Begrenzen des Entlastungsdrucks - z.B. einer Entlastungsleitung - durch Einstellen eines Öffnungsdrucks eines elektronisch ansteuerbaren proportionalen Entlastungsdruckbegrenzungsventils über eine Steuereinheit in Abhängigkeit von der Steigungsrate.

Die Steigungsrate kann dabei im Extremfall einer abfallenden Stufe im Bodenprofil auch unendlich hoch sein. Damit ist ein Verfahren geschaffen, bei dem trotz minimiertem Fahrwiderstand durch Reduzierung der Gewichtskraft eines angekoppelten Anbaugerätes - auf z.B. 20% - eine verbesserte schnell reagierende Nachführung des Anbaugerätes bei Unebenheiten des Bodens möglich ist. Weiterhin kann das Anbaugerät im Normalbetrieb mit höherer Entlastung (durch höheren Entlastungsdruck) geschoben oder gezogen werden, wodurch Kraftstoff eingespart wird.

Erfindungsgemäß wird bei einer von der Sensoranordnung ermittelten negativen Steigungsrate des Bodenprofils der Öffnungsdruck des Entlastungsdruckbegrenzungsventils verringert, wobei bei einer von der Sensoranordnung ermittelten positiven Steigungsrate der Öffnungsdruck des Entlastungsdruckbegrenzungsventils erhöht wird.

Erfindungsgemäß erfolgt das Begrenzen des Entlastungsdrucks nur, wenn ein vorbestimmter Höhenunterschied über- bzw. unterschritten und über die Sensoranordnung ermittelt wird. Damit wird sicher gestellt, dass ein kurzes Absacken oder kurzwegiges Schwingen des Anbaugerätes nicht zur erfindungsgemäßen Regelung führt.

Bei einer besonders bevorzugten Weiterbildung des erfindungsgemäßen Verfahrens wird beim Einstellen des Öffnungsdrucks dieser impulsartig kurzzeitig (z.B. 200-400ms) verringert. Damit wird die Hysterese des Gesamtsystems überwunden und das Anbaugerät wird mit erhöhter Gewichtskraft nach unten beschleunigt.

Vorzugsweise erfolgt zusätzlich ein Begrenzen eines Belastungsdrucks - z.B. einer Belastungsleitung - durch Einstellen eines Öffnungsdrucks eines elektronisch ansteuerbaren proportionalen Belastungsdruckbegrenzungsventils über die Steuereinheit in Abhängigkeit von den Signalen der Sensoranordnung. Damit kann bei besonders abrupt abfallendem Bodenprofil oder bei einem besonders leichten Arbeitsgerät eine optimale Nachführung gewährleistet werden, oder ein langsam fallender Entlastungsdruck kann kompensiert werden.

Das Erfassen der Steigungsrate des Bodenprofils erfolgt vorzugsweise über ein Messen einer Winkelgeschwindigkeit - z.B. durch Differentiation des Winkels - zwischen einem Lenker - insbesondere Unterlenker - und der mobilen Arbeitsmaschine.

Im Folgenden wird anhand der Figuren ein Ausführungsbeispiel der Erfindung detailliert beschrieben. Es zeigen:
Figur 1 einen Traktor, an den über ein erfindungsgemäß gesteuertes Hubwerk ein Mähwerk gekoppelt ist, in einer seitlichen Ansicht;
Figur 2 einen vereinfachten Schaltplan einer hydraulischen Anordnung des erfindungsgemäß gesteuerten Hubwerks;
Figur 3 einen Verlauf einer Winkellage und einer entsprechende Winkelgeschwindigkeit eines Unterlenkers des erfindungsgemäß gesteuerten Hubwerks; und
Figur 4 einen Verlauf eines Entlastungsdrucks mit Bezug zu Figur 3.

Die Erfindung wird im Folgenden anhand eines doppelt wirkenden Fronthubwerks 1 eines Traktors erläutert. Der Grundaufbau dieses Fronthubwerks 1 ist ausführlich in der DE 10 2005 005 314 A1 beschrieben, so dass hier nur auf die zum Verständnis der Erfindung wesentlichen Bauelemente eingegangen wird.

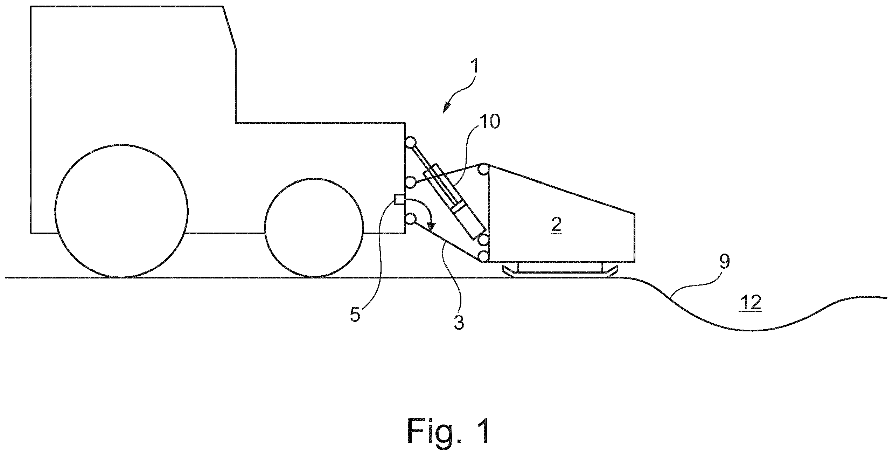

Figur 1 zeigt den Traktor in einer seitlichen Ansicht, an den über das erfindungsgemäße Fronthubwerk 1 ein Mähwerk 2 gekoppelt ist. Das Fronthubwerk 1 hat einen Hubzylinder 10, der als Entlastungszylinder und als Belastungszylinder wirkt. Es ist aber auch eine hydraulische Anordnung mit einfach wirkender Ausführung denkbar. Über den Hubzylinder 10 ist eine das Mähwerk 2 tragende und am Traktor angelenkte Lenkeranordnung zum Anheben oder Absenken des Mähwerks 2 verschwenkbar. Über einen Winkelaufnehmer 5 wird ein Winkel zwischen dem Traktor und einem Unterlenker 3 der Lenkeranordnung ermittelt. Dieser vergrößert sich, wenn das Mähwerk 2 mit seinen Gleitkufen 7 über ein Gefälle 9 in eine Senke 12 oder von einer (nicht gezeigten) Kuppe herunter geschoben wird. Der Winkel verkleinert sich, wenn das Mähwerk 2 über eine Steigung aus der Senke 12 heraus oder auf eine (nicht gezeigte) Kuppe geschoben wird.

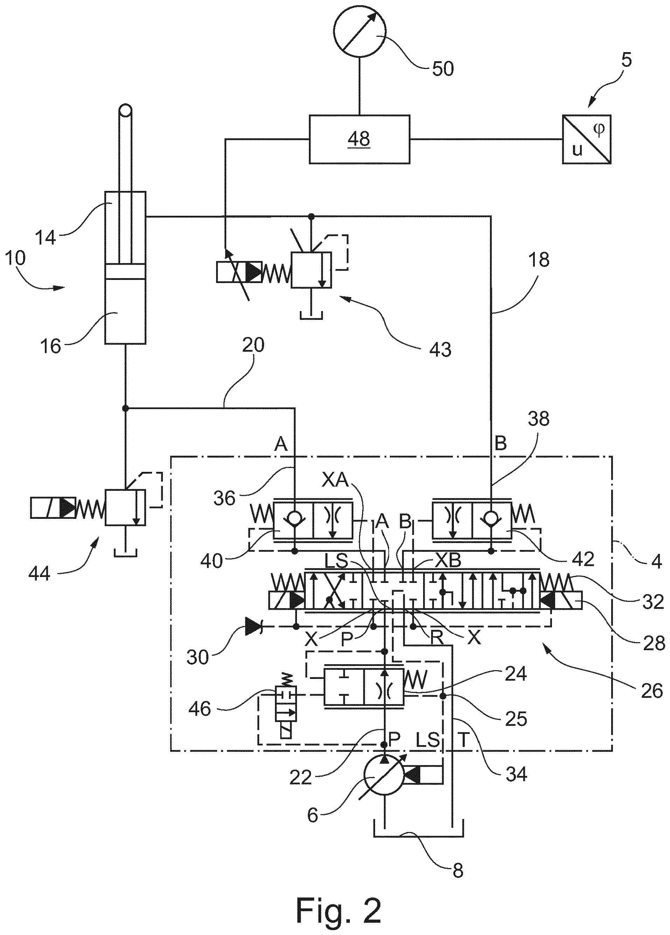

Der in Figur 2 dargestellte hydraulische Schaltplan dient zur Steuerung des Fronthubwerks 1 über den Hubzylinder 10. Die Bewegung einer Kolbenstange des Hubzylinders 10 erfolgt über eine Hubwerksventilanordnung 4, über die zwei Druckräume 14, 16 des Hubzylinders 10 mit einer Verstellpumpe 6 oder einem Tank 8 verbindbar sind. Der Hubzylinder 10 hat einen in Richtung "Tragen" wirksamen Entlastungsdruckraum 14 und einen in Richtung "Niederdrücken" wirksamen Belastungsdruckraum 16, die jeweils über Arbeitsleitungen 18, 20 mit Arbeitsanschlüssen A, B der Hubwerksventilanordnung 4 verbunden sind.

Der Aufbau derartiger Hubwerksventilanordnungen 4 ist beispielsweise im Datenblatt RD 66 130/02.07 oder RD 66 165/09.04 der Bosch Rexroth AG beschrieben. Üblicherweise sind diese Hubwerksventilanordnungen 4 in Scheibenbauweise ausgeführt und in einem Mobilsteuerblock des Traktors integriert. Im dargestellten Ausführungsbeispiel hat die Hubwerksventilanordnung 4 einen Druckanschluss P und einen Tankanschluss T, die mit der Verstellpumpe 6 bzw. dem Tank 8 verbunden sind. Die Hubwerksventilanordnung 4 ist als Load-Sensing System ausgeführt. In einem an den Druckanschluss P angeschlossenen Zulaufkanal 22 ist eine Load-Sensing-Druckwaage 24 angeordnet, die in Öffnungsrichtung von der Kraft einer Feder und dem Lastdruck des Hubzylinders 10 in einem Load-Sensing-Kanal 25 und in Schließrichtung vom Pumpendruck stromabwärts der Load-Sensing-Druckwaage 24 beaufschlagt ist.

Der Zulaufkanal 22 führt zu einem Druckanschluss P eines stetig verstellbaren Wegeventils 26, das über eine Pilotventilanordnung 28 verstellbar ist. Diese besteht beispielsweise aus über einen Joystick ansteuerbare Pilotventilen, die an eine Steuerölversorgung 30 angeschlossen sind. Ein Ventilschieber des Wegeventils 26 ist über eine Zentrierfederanordnung 32 in eine in Figur 2 dargestellte Grundposition vorgespannt, in der der Eingangsanschluss P sowie zwei Arbeitsanschlüsse A, B und Steueranschlüsse XA, XB, X abgesperrt sind sowie ein Load-Sensing-Anschluss LS mit einem Rücklaufanschluss R verbunden ist. Der Rücklaufanschluss R ist über einen Tankkanal 34 mit dem Tankanschluss T der Hubwerksventilanordnung 4 verbunden.

Durch geeignete Einstellung der Pilotventilanordnung 28 kann der Ventilschieber des Wegeventils 26 aus seiner Grundposition (in Figur 2) nach rechts in Entlasten-Positionen verstellt werden, in denen über eine Zumessblende eine Druckmittelverbindung vom Eingangsanschluss P zum Arbeitsanschluss B des Wegeventils 26 aufgesteuert wird, so dass entsprechend Druckmittel in den Entlastungsdruckraum 14 des Hubzylinders 10 gefördert wird. Das aus dem Belastungsdruckraum 16 verdrängte Druckmittel strömt dabei über den mit dem Rücklaufanschluss R verbundenen Arbeitsanschluss A zum Tank 8 ab. Beim Verstellen des Ventilschiebers in Figur 2 nach links in Belasten-Positionen wird über die Zumessblende eine Druckmittelverbindung vom Druckanschluss P zum Arbeitsanschluss A des Wegeventils 26 hergestellt, und der Arbeitsanschluss B wird mit dem Rücklaufanschluss R verbunden, so dass entsprechend zum Niederdrücken des Mähwerkes 2 Druckmittel in den Belastungsdruckraum 16 gefördert wird. Das aus dem Entlastungsdruckraum 14 verdrängte Druckmittel strömt zum Tank 8 ab.

Beim Verschieben des Ventilschiebers des Wegeventils 26 (in Figur 2) nach links in eine Schwimmstellung sind die beiden Arbeitsanschlüsse A, B des Wegeventils 26 und damit auch die beiden Druckräume 14, 16 des Hubzylinders 10 mit dem Rücklaufanschluss R verbunden, so dass das Mähwerk 2 ohne Krafteinwirkung durch das Hubwerk auf dem Boden aufliegt.

Die beiden Arbeitsanschlüsse A, B des Wegeventils 26 sind über einen Vorlaufkanal 36 bzw. einen Ablaufkanal 38 mit den Arbeitsanschlüssen A, B der Hubwerksventilanordnung 4 verbunden. In den Kanälen 36, 38 ist jeweils ein Senkenmodul 40, 42 angeordnet, das in einer federvorgespannten Grundposition als entsperrbares Rückschlagventil zu leckölfreien Einspannung des Hubzylinders 10 und in Regelpositionen den vom Hubzylinder 10 zurückströmenden Druckmittelvolumenstrom im Sinne einer Ablaufregelung steuert. Hierzu ist jedes Senkenmodul 40, 42 in Richtung seiner Rückschlagposition vom Druck an dem zugeordneten Arbeitsanschluss A, B des Wegeventils 26 und in Richtung seiner Öffnungs-/Drosselposition durch den Steuerdruck der Steuerölversorgung 30 beaufschlagt.

Der individuelle Lastdruck am Hubzylinder 10 wird über den Load-Sensing-Anschluss LS des Wegeventils 26 abgegriffen und beaufschlagt die Individualdruckwaage bzw. die Load-Sensing-Druckwaage 24 - wie bereits erwähnt - in Öffnungsrichtung.

Zum Einfahren des Hubzylinders 10 und damit zum Entlasten oder zum Anheben des Mähwerks 2 wird das Wegeventil 26 derart verstellt, dass das Druckmittel von der Verstellpumpe 6 über den Zulaufkanal 22, die Load-Sensing-Druckwaage 24, die aufgesteuerte Zumessblende des Wegeventils 26, den Arbeitsanschluss B des Wegeventils 26, das Rückschlagventil des Senkenmoduls 42, den Ablaufkanal 38 und über die Arbeitsleitung 18 in den Entlastungsdruckraum 14 gefördert wird. Der Pumpendruck wird dabei zur Energieeinsparung so eingestellt, dass er stets nur um eine vorbestimmte Druckdifferenz oberhalb des höchsten Lastdrucks aller Verbraucher - z.B. des Hubzylinders 10 - des Traktors liegt (Load-Sensing). Das beim Einfahren des Hubzylinders 10 aus dem Belastungsdruckraum 16 verdrängte Druckmittel strömt über die Arbeitsleitung 20, den Vorlaufkanal 36, das über den Steuerdruck in der Steuerölversorgung 30 aufgesteuerte Senkenmodul 40, die Anschlüsse A, R des Wegeventils 26 und über den Tankkanal 34 zum Tank 8 ab. Das Senkenmodul 40 wirkt dabei als Ablaufdruckwaage, über die der ablaufende Druckmittelvolumenstrom in gewissen Umfang geregelt wird.

Bei dem in Figur 2 dargestellten Ausführungsbeispiel kann die Druckwaage 24 in ihrer Schließposition fixiert werden, in dem die in Schließrichtung wirksame Steuerfläche über ein elektrisch betätigtes 2/2-Wege-Pilotventil 46 mit dem Druck stromaufwärts der Druckwaage 24 beaufschlagt wird, der - wie oben erwähnt - in jedem Fall größer als der Lastdruck am Hubzylinder 10 ist. Durch dieses Schließen ist es möglich, trotz aufgesteuerter Zumessblende den Druckmittelströmungspfad zwischen Verstellpumpe 6 und Wegeventil 26 abzusperren.

Der Druck in der Arbeitsleitung 20 kann über ein stetig verstellbares Belastungsdruckbegrenzungsventil 44 begrenzt werden, so dass der Druck im Belastungsdruckraum 16 unabhängig von der Einstellung des Wegeventils 26 und vom Pumpendruck, beispielsweise im Bereich zwischen 5 bis 230 bar einstellbar ist. Auf diese Weise kann durch Verstellen des Belastungsdruckbegrenzungsventil 44 auf seinen Minimaldruck, beispielsweise 5 bar, das eigentlich doppelt wirkende Fronthubwerk 1 einfach wirkend betrieben werden, so dass das Mähwerk 2 auch bei Einstellung des Wegeventils 26 in seine Belasten-Positionen praktisch nur auf Grund seines Eigengewichtes absinkt. Nach dem Absenken kann das Wegeventil 26 dann in seine Schwimmstellung verstellt werden, so dass eventuelle Unebenheiten des Bodens ausgeglichen werden können. Dieses Verhalten entspricht dann demjenigen herkömmlicher einfach wirkender Hubwerke.

Weiterhin ist in der Arbeitsleitung 18 ein Entlastungsdruckbegrenzungsventil 43 vorgesehen, das ebenfalls stetig verstellbar ausgeführt ist, und über das der Druck in der Arbeitsleitung 18 beispielsweise auf Werte zwischen 5 bis 230 bar begrenzbar ist. Das Entlastungsdruckbegrenzungsventil 43 ist ein Proportional-Druckbegrenzungsventil, das von einem elektronischen Steuergerät bzw. von einer elektronischen Steuereinheit 48 angesteuert wird. Dies geschieht in Abhängigkeit eines Potenziometers 50, das vom Fahrer des Traktors eingestellt wird. Erfindungsgemäß erfolgt weiterhin die elektronische Ansteuerung des Entlastungsdruckbegrenzungsventils 43 über eine elektronische Regelung in Abhängigkeit des Winkelaufnehmers 5, der den aktuellen Winkel zwischen dem Unterlenker 3 und dem Traktor (vgl. Figur 1) in ein Spannungs- oder Stromsignal umwandelt.

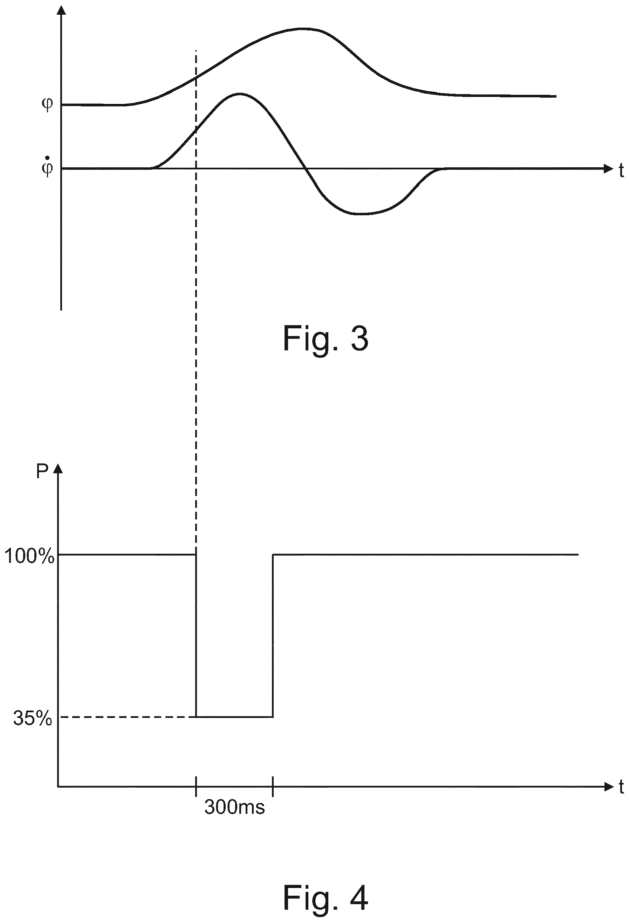

Figur 3 zeigt einen beispielhaften Winkelverlauf ϕ zwischen dem Unterlenker 3 und dem Traktor (vgl. Figur 1) über die Zeit. Dabei ist ein Durchfahren der Senke 12 (vgl. Figur 1) dargestellt, die zu einer übergangsweisen Vergrößerung des Winkels ϕ führt.

Weiterhin ist in Figur 3 die durch Differentation des Winkelverlaufs ϕ ermittelte Winkelgeschwindigkeit über die Zeit aufgetragen. Dies erfolgt durch die Steuereinheit 48.

Figur 4 zeigt den schematischen Verlauf des Entlastungsdrucks über die Zeit mit Bezug zum Beispiel aus Figur 3. Dabei ist dargestellt, dass der - insbesondere in Abhängigkeit des Eigengewichts des Mähwerks 2 - gewählte Entlastungsdruck von 100% unmittelbar nach Überschreiten einer vorbestimmten positiven Winkelgeschwindigkeit kurzzeitig stark abgesenkt wird. Dabei kann z.B. für eine Dauer von 300ms eine Absenkung auf 35% des zuvor gewählten Entlastungsdrucks vorgenommen werden. Damit wird ein schnelles Nachfolgen bzw. Absinken des Mähwerks 2 (vgl. Figur 1) nach unten ermöglicht.

Über das gezeigte Ausführungsbeispiel hinausgehend kann auch das Belastungsdruckbegrenzungsventil 44 bei Überschreiten einer gewissen Winkelgeschwindigkeit kurzzeitig auf einen höheren Öffnungsdruck eingestellt werden, so dass das Mähwerk 2 kurzzeitig zusätzlich belastet und somit schneller abgesenkt wird.

Abweichend vom gezeigten Ausführungsbeispiel kann der Winkelaufnehmer auch durch einen am Traktor oder vorzugsweise in Fahrtrichtung weiter vorn am Mähwerk angeordneten Abstandssensor ersetzt werden.

Offenbart ist ein Hubwerk, das hydraulisch betrieben wird und zur Montage oder zur Verwendung an einer mobilen Arbeitsmaschine vorgesehen ist. Das Hubwerk bzw. seine Hydraulik weist ein Entlastungsdruckbegrenzungsventil auf, das in Abhängigkeit vom Bodenprofil regelbar ist. Dazu ist eine direkt oder indirekt messende Sensoranordnung vorgesehen.

Offenbart ist weiterhin ein Verfahren, das zur Regelung eines Entlastungsdrucks eines Hubwerks einer mobilen Arbeitsmaschine dient. Das Verfahren hat die Schritte:
- Erfassen des Bodenprofils über eine Sensoranordnung; und
- Begrenzen des Entlastungsdrucks einer Entlastungsleitung durch Einstellen eines Öffnungsdrucks eines elektronisch ansteuerbaren proportionalen Entlastungsdruckbegrenzungsventils über eine Steuereinheit in Abhängigkeit von Signalen der Sensoranordnung.

### Bezugszeichenliste

- 1: Fronthubwerk
- 2: Mähwerk
- 3: Unterlenker
- 4: Hubwerksventilanordnung
- 5: Winkelaufnehmer
- 6: Verstellpumpe
- 7: Gleitkufe
- 8: Tank
- 9: Gefälle
- 10: Hubzylinder
- 12: Senke
- 14: Entlastungsdruckraum
- 16: Belastungsdruckraum
- 18: Arbeitsleitung
- 20: Arbeitsleitung
- 22: Zulaufkanal
- 24: Load-Sensing-Druckwaage
- 26: Wegeventil
- 28: Pilotventilanordnung
- 30: Steuerölversorgung
- 32: Zentrierfederanordnung
- 34: Tankkanal
- 36: Vorlaufkanal
- 38: Ablaufkanal
- 40: Senkenmodul
- 42: Senkenmodul
- 43: Entlastungsdruckbegrenzungsventil
- 44: Belastungsdruckbegrenzungsventil
- 45: Elektromagnet
- 46: Pilotventil
- 48: Steuereinheit
- Δt: Zeit
- Δh: Höhenänderung

## Patentansprüche

1. Verfahren zur Regelung eines Entlastungsdrucks eines Hubwerks (1) einer mobilen Arbeitsmaschine, wobei das Hubwerk (1) im zum Boden abgesenkten Zustand eines daran gekoppelten und geschobenen oder gezogenen Anbaugerätes (2) eine Entlastungskraft zur Verfügung stellt, mit den Schritten:
- Erfassen einer Höhenänderung (Δh) eines Bodenprofils pro Zeit (Δt) über eine Sensoranordnung (5, 48); und
- Begrenzen des Entlastungsdrucks durch Einstellen eines elektronisch ansteuerbaren proportionalen Entlastungsdruckbegrenzungsventils (43) über eine Steuereinheit (48) in Abhängigkeit von Signalen der Sensoranordnung (5, 48), wobei bei einer von der Sensoranordnung (5, 48) ermittelten Verringerung der Höhe des Bodenprofils ein Öffnungsdruck des Entlastungsdruckbegrenzungsventils (43) verringert wird, wobei bei einer von der Sensoranordnung (5, 48) ermittelten Vergrößerung der Höhe des Bodenprofils der Öffnungsdruck des Entlastungsdruckbegrenzungsventils (43) erhöht wird, und wobei das Begrenzen des Entlastungsdrucks nur erfolgt, wenn der Betrag einer vorbestimmten Höhenänderung (Δh) überschritten wird.

2. Verfahren nach Anspruch 1 mit dem Schritt:
- Begrenzen eines Belastungsdrucks durch Einstellen eines elektronisch ansteuerbaren proportionalen Belastungsdruckbegrenzungsventils (44) über die Steuereinheit (48) in Abhängigkeit von den Signalen der Sensoranordnung (5, 48).

3. Verfahren nach einem der Ansprüche 1 bis 2, wobei das Erfassen der Höhenänderung (Δh) des Bodenprofils pro Zeit (Δt) über ein Messen einer Winkelgeschwindigkeit zwischen einem Lenker (3) und der mobilen Arbeitsmaschine erfolgt.

## Claims

1. Method for regulating a relieving pressure of a lifting mechanism (1) of a mobile working machine, wherein the lifting mechanism (1) provides a relieving force when an attachment (2) that is coupled to it and is pushed or pulled is in the state of being lowered to the ground, comprising the steps of:
- detecting a change in height (Δh) of a ground profile per unit of time (Δt) by means of a sensor arrangement (5, 48); and
- limiting the relieving pressure by setting an electronically activatable proportional relieving pressure limiting valve (43) by means of a control unit (48) in dependence on signals of the sensor arrangement (5, 48), wherein, when there is a reduction in the height of the ground profile, determined by the sensor arrangement (5, 48), an opening pressure of the relieving pressure limiting valve (43) is reduced, wherein, when there is an increase in the height of the ground profile, determined by the sensor arrangement (5, 48), the opening pressure of the relieving pressure limiting valve (43) is increased, and wherein the limiting of the relieving pressure only takes place if the amount of a predetermined change in height (Δh) is exceeded.

2. Method according to Claim 1, comprising the step of:
- limiting a loading pressure by setting an electronically activatable proportional loading pressure limiting valve (44) by means of the control unit (48) in dependence on the signals of the sensor arrangement (5, 48).

3. Method according to either of Claims 1 and 2, wherein the detection of the change in height (Δh) of the ground profile per unit of time (Δt) is performed by measuring an angular velocity between a link (3) and the mobile working machine.

## Revendications

1. Procédé de réglage d'une pression de décharge d'un mécanisme de levage (1) d'une machine de travail mobile, le mécanisme de levage (1), dans l'état abaissé au sol d'un engin de construction (2) accouplé à celui-ci et poussé ou tracté, fournissant une force de décharge, comprenant les étapes suivantes :
- détection d'une variation de hauteur (Δh) d'un profil du sol par unité de temps (Δt) par le biais d'un agencement de capteurs (5, 48) ; et
- limitation de la pression de décharge par ajustement d'une soupape proportionnelle de limitation de la pression de décharge (43) à commande électronique par le biais d'une unité de commande (48) en fonction de signaux de l'agencement de capteurs (5, 48),
dans lequel, dans le cas d'une réduction de la hauteur du profil du sol détectée par l'agencement de capteurs (5, 48), une pression d'ouverture de la soupape de limitation de la pression de décharge (43) est réduite, dans lequel dans le cas d'une augmentation de la hauteur du profil du sol détectée par l'agencement de capteurs (5, 48), la pression d'ouverture de la soupape de limitation de pression de décharge (43) est augmentée, et dans lequel la limitation de la pression de décharge ne s'effectue que lorsque l'amplitude d'une variation de hauteur prédéterminée (Δh) est dépassée.

2. Procédé selon la revendication 1, comprenant l'étape suivante :
- limitation d'une pression de charge par ajustement d'une soupape proportionnelle de limitation de la pression de charge (44) à commande électronique par le biais de l'unité de commande (48) en fonction des signaux de l'agencement de capteurs (5, 48).

3. Procédé selon l'une quelconque des revendications 1 et 2, dans lequel la détection de la variation de hauteur (Δh) du profil du sol par unité de temps (Δt) s'effectue par le biais d'une mesure d'une vitesse angulaire entre un bras oscillant (3) et la machine de travail mobile.
